# EUROPÄISCHE PATENTANMELDUNG

(11) **EP 1 122 894 A2**
(43) Veröffentlichungstag der Anmeldung: **08.08.2001**
(21) Anmeldenummer: 00127746.6
(22) Anmeldetag: 18.12.2000
(51) Int. Cl.: H04B 7/185

(54) **Satellitenkommunikationsnetzwerk und Verfahren zum Routen von Verbindung**

(30) Priorität: 31.01.2000 DE 10004081
(71) Anmelder: SIEMENS AKTIENGESELLSCHAFT, 80333 München (DE)
(72) Erfinder: Bella, Luigi, 2202HZ Noordwjk A/ZEE (NL); Chummun, Ferial, 2311 GG Leiden (NL); Rammer, Josef, Dr., A-1100 Wien (AT)

(57) **Zusammenfassung**

In einem Satelliten-Kommunikationsnetzwerk (NET) werden Verbindungen zwischen zwei Kommunikationssatelliten (SAT, SA1 - SA5, ST1 - ST3) über einen voreingestellten Verbindungsweg hergestellt. Bei einem Blockade- bzw. Überlastungsereignis dieses Verbindungsweges werden von dem dieses Ereignis feststellenden Kommunikationssatelliten über einen geostationären Routing-Satelliten (GES, GE1 - GE3) Routing-Anfragen an einen Routing-Prozessor (RCP, RC1 - RC3) übermittelt. Dieser errechnet einen alternativen Verbindungsweg, welchen er an den anfragenden Kommunikationssatelliten übermittelt.

## Beschreibung

Die Erfindung betrifft ein Verfahren zum Routen von Verbindungen in einem vermittelnden Satelliten-Kommunikationsnetzwerk mit Kommunikationssatelliten, wobei jeder Kommunikationssatellit mit zumindest einem anderen Kommunikationssatelliten des Netzwerkes über eine Zwischensatellitenverbindung verbunden ist, und ein beliebiges Paar von Kommunikationssatelliten über zumindest einen voreingestellten, aus einer bestimmten Reihenfolge von Zwischensatellitenverbindungen bestehenden Verbindungsweg miteinander verbindbar ist.

Weiters betrifft die Erfindung ein vermittelndes Satelliten-Kommunikationsnetzwerk zum Routen von Verbindungen mit Kommunikationssatelliten, wobei jeder Kommunikationssatellit mit zumindest einem anderen Kommunikationssatelliten des Netzwerkes über eine Zwischensatellitenverbindung in Verbindung steht, und ein beliebiges Paar von Kommunikationssatelliten über zumindest einen voreingestellten, aus einer bestimmten Reihenfolge von Zwischensatellitenverbindungen bestehenden Verbindungsweg miteinander verbindbar ist.

Für Verteilungsfunktionen, etwa von Fernseh- und Tonprogrammen, in letzter Zeit vermehrt aber auch von Daten, werden immer häufiger Satelliten eingesetzt. Neue Anwendungen wie der Satelliten-Mobilfunk, der bisher fast ausschließlich auf die See- und Luftfahrt sowie auf Landfahrzeuge beschränkt war, beginnt sich, getragen von dem Wunsch nach globaler, persönlicher Kommunikation mehr und mehr zu etablieren.

Auf einfache Weise lassen sich Satellitensysteme durch die Bahnhöhe ihrer Satelliten charakterisieren. Allgemein üblich ist die Unterteilung in "Low Earth Orbit (LEO)", "Medium Earth Orbit (MEO)" und "Geostationary Orbit (GEO)"-Systeme.

Die LEO-Satelliten befinden sich zwischen ca. 200 km Höhe und dem inneren van Allen Gürtel, MEO-Satelliten bewegen sich auf Umlaufbahnen in Höhen zwischen etwa 5000 km und 13000 km. GEO-Satelliten benötigen in einer Höhe von ca. 36000 km genau einen Tag für einen Umlauf. Schließlich seien noch kurz die sogenannten "Highly Elliptical Orbit (HEO)"-Systeme erwähnt, bei denen durch eine elliptische Bahn eine bessere Abdeckung stärker bevölkerter Gebiete erreicht werden kann.

GEO-Satellitensysteme zeichnen sich durch eine hohe Praktikabilität der Geostationarität aus. Auch werden im Vergleich zu LEO- oder MEO-Systemen wesentlich weniger Satelliten zur Versorgung eines bestimmten Gebietes benötigt. Demgegenüber stehen allerdings die bei LEO- und MEO-Systemen wesentlich kürzeren Signallaufzeiten und Pfadverluste, was dazu führt, dass sich diese Systeme für die mobile Kommunikation, für Zugriffe auf Datennetze, Videokonferenzen etc. durchzusetzen beginnen.

Verschiedene Breitband-Satellitenkommunikationssysteme basierend auf LEO- oder MEO-Systemen, bei welchen als Kommunikationssatelliten nicht-geostationäre Satelliten verwendet werden, sind derzeit in der Planungs- bzw. Implementierungsphase, wie beispielsweise das TELEDESIC-System.

Ein bereits in Betrieb befindliches Satellitenkommunikationsnetzwerk ist etwa das IRIDIUM-System. Dieses besteht aus 66 Satelliten, welche auf 6 Umlaufbahnen um die Erde umlaufen. Jeder Satellit dieses Netzwerkes steht mit seinen jeweils vier benachbarten Satelliten über sogenannte Zwischensatellitenverbindungen ("Inter Satellite Link", ISL) in Verbindung, für welche ebenso wie für die Gateway-Satellitenverbindungen 200 MHz im Ka-Band vorgesehen sind. Für nähere Details sei beispielsweise verwiesen auf "Mobilfunknetze und ihre Protokolle", Band 2, B. Walke, Teubner, ISBN 3-519-06431-6. Mittels der Zwischensatellitenverbindungen kann auf eine große Anzahl von Gateways, über welche vereinfacht gesprochen die Verbindung zu anderen Netzen hergestellt wird, verzichtet werden. Außerdem ist mittels Zwischensatellitenverbindungen die Versorgung über den Ozeanen gewährleistet.

Zum momentanen Zeitpunkt der Planung wird das TELEDESIC-System im Endausbau voraussichtlich über ca. 200 Satelliten verfügen, die sich in einer Höhe von etwa 700 km bewegen. Das TELEDESIC-Netz nutzt Verbindungen im 60 GHz-Band zur Kommunikation zwischen den Satelliten, wobei von einem Satellit Verbindungen zu mehreren Nachbarsatelliten bestehen. Auf diese Weise wird es beispielsweise möglich, Verbindungen möglichst nah bei einem Zielteilnehmer in ein Festnetz einzuspeisen.

Das TELEDESIC-Netz überträgt paketvermittelt und unterstützt Breitbandkommunikation nach dem ATM-Standard ("Asynchronous Transfer Mode"). Abweichend vom ATM-Standard, der später noch eingehender beschrieben wird, wird ein verbindungsloses Protokoll verwendet. Nähere Details hierzu sind beispielsweise "Mobilfunknetze und ihre Protokolle", Band 2, B. Walke, Teubner, ISBN 3-519-06431-6, S. 362 - 367 zu entnehmen.

Auf einfache Weise kann eine Verbindung zwischen zwei beliebigen Satelliten des Satelliten-Kommunikationsnetzwerkes über voreingestellte Kommunikationswege hergestellt werden, wobei ein solcher voreingestellter Kommunikationsweg über vorgegebene Zwischensatellitenverbindungen von einem Quellsatelliten, über den ein Benutzer einen Verbindungsaufbau herstellt, zu einem Zielsatelliten läuft. Über den Zielsatelliten wird schließlich die Verbindung zu der gewünschten Gegenstelle hergestellt.

Nachteilig an diesem technisch einfachen und kostengünstig zu realisierenden Verfahren zum Herstellen von Verbindungen in einem Satelliten-Kommunikationsnetzwerk ist allerdings, dass sich in Überlastungssituationen des Netzwerks oder einer Blockade einer Zwischensatellitenverbindung in einem voreingestellten Kommunikationspfad hohe Verlustraten ergeben und die gewünschte Verbindung nur unter relativ hohen Zeitverzögerungen oder auch gar nicht hergestellt werden kann. Weiters ist die Netzauslastung bei Verwendung von vorgegebenen Verbindungswegen äußerst ineffizient.

Eine andere, wesentlich aufwendigere Lösung besteht darin, optimale Verbindungswege dynamisch unter Berücksichtigung der Netzbelastung zu berechnen. Dazu müssen allerdings die Lastdaten über die Netzbelastung häufig zwischen den Kommunikationssatelliten ausgetauscht werden ("flooding"). Dieses Verfahren ist aufwendig zu realisieren und weist weiters auch noch den Nachteil auf, dass durch das häufige Austauschen von Lastdaten die Verbindungen zwischen den Satelliten zusätzlich zu dem herkömmlichen Lastaufkommen stark in Anspruch genommen wird.

Es ist eine Aufgabe der Erfindung, die Ermittlung optimaler Verbindungswege zwischen beliebigen Kommunikationssatelliten eines Satelliten-Kommunikationsnetzwerkes dynamisch, unter Berücksichtigung aktueller Lastdaten im Kommunikationsnetzwerk zu ermöglichen, ohne dass dazu die Lastdaten zwischen den Kommunikationssatelliten ausgetauscht werden müssen.

Diese Aufgabe wird mittels eines eingangs erwähnten Verfahrens dadurch gelöst, dass erfindungsgemäß bei Blockade- bzw. Überlastungsereignissen betreffend den primären Verbindungsweg von dem das Blockade- bzw. Überlastungsereignis feststellenden Kommunikationssatelliten eine Routing-Anfrage an zumindest einen dem Satelliten-Kommunikationsnetzwerk zugeordneten Routing-Prozessor übermittelt wird, welcher unter Benutzung der an ihn übermittelten Routing-Anfragen zumindest einen alternativen Verbindungsweg errechnet und diesen an den die Routing-Anfrage tätigenden Kommunikations-satelliten des primären Verbindungsweges übermittelt

Mit dem erfindungsgemäßen Verfahren wird ein effektiver Routingmechanismus geschaffen, mit dessen Hilfe die teuren Ressourcen der Zwischensatellitenverbindungen auf optimale Weise genutzt werden können. Der Verkehrsdurchsatz im Satelliten-netzwerk kann maximiert werden, während gleichzeitig dem Endbenutzer eine akzeptable Blockade-Leistung sowie akzeptable Dienstgüteparameter ("Quality of Service" = QoS) geboten werden.

Um die Zahl der Anfragen gering zu halten, ist bei vorteilhaften Verfahren vorgesehen, dass Routing-Anfragen nur bei jedem n-ten Blockade- bzw. Überlastungsereignis an den Routing-Prozessor übermittelt werden. So wird für n=5 ein Routing-Satellit nur bei jedem fünften Blockade/Überlastungsereignis eine Routing-Anfrage an einen Routing-Prozessor übermitteln. Falls es die Gegebenheiten erfordern, kann natürlich auch n=1 gewählt werden, so dass bei jedem Blockadeereignis eine Routing-Anfrage getätigt wird.

Als zweckmäßig erweist es sich, wenn die Routing-Anfrage des die Blockade/Überlastung feststellenden Kommunikationssatelliten über einen ihm zumindest temporär zugeordneten Routing-Satelliten zu dem Routing-Prozessor übermittelt wird und die Übermittlung des zumindest einen alternativen Verbindungsweges an den die Blockade/Überlastung feststellenden Kommunikationssatelliten über einen ihm zumindest temporär zugeordneten Routing-Satelliten erfolgt. Vorteilhafterweise wird dabei als Routing-Satellit ein geostationärer Satellit verwendet.

Durch die Verwendung von speziellen Routing-Satelliten, bei denen es sich vorteilhafterweise um geostationäre Satelliten handelt, kann die Anzahl der notwendigen Routing-Prozessoren zum Ermitteln von alternativen Verbindungswegen in einem beliebigen Gebiet des Satelliten-Kommunikationsnetzwerkes gering gehalten werden.

Um nahezu das gesamte Satelliten-Kommunikationsnetzwerk erfassen zu können, werden für das Satelliten-Kommunikationsnetzwerk zumindest zwei Routing-Satelliten verwendet. Bei Verwendung von geostationären Satelliten sind dabei genau zwei Satelliten ausreichend, um nahezu die gesamte Erfassung zu erlauben.

Vorteilhafterweise werden bei dem erfindungsgemäßen Verfahren zumindest zwei Routing-Prozessor verwendet, um die Ermittlung alternativer Verbindungswege für das gesamte Satelliten-Kommunikationsnetzwerk zu ermöglichen.

Um das gesamte Satellitenkommunikationsnetzwerk abdecken zu können, werden drei geostationäre Routing-Satelliten verwendet, wobei jedem Routing-Satelliten zumindest ein Routing-Prozessor zugeordnet ist.

Bei einem besonders zweckmäßigen Verfahren nach der Erfindung werden erdgestützte Routing-Prozessor verwendet, da diese auf einfache Weise gewartet und bei Bedarf beispielsweise mit neuer Software ausgerüstet werden können.

Im Sinne einer optimalen Berechnung eines alternativen Verbindungsweges ist es, wenn ein Routing-Prozessor die Lastverteilungen im gesamten Satelliten-Kommunikationsnetzwerkes heranziehen kann. Bei einem erprobten Verfahren werden dazu Lastdaten betreffend Lastverteilungen im Satellitenkommunikationsnetzwerk zwischen den Routing-Prozessoren - vorzugsweise in festen Zeitintervallen - ausgetauscht.

Dabei erweist die sich als günstig, wenn die Lastdaten mittels der Routing-Satelliten zwischen den Routing-Prozessoren ausgetauscht werden.

Besonders vorteilhaft ist das erfindungsgemäße Verfahren bei einer Verwendung zum Routen von Verbindungen in einem ATM-Satelliten-Kommunikationsnetzwerk.

Die genannten Aufgaben werden weiters mittels eines eingangs genannten, vermittelnden Satelliten-Kommunikationsnetzwerkes erfindungsgemäß dadurch gelöst, dass die Kommunikationssatelliten dazu eingerichtet sind, im Falle einer Überlastung/Blockade eine Routing-Anfrage an zumindest einen dem Satelliten-Kommunikationsnetzwerk zugeordneten Routing-Prozessor zu übermitteln, wobei die Anfrage von dem die Überlastung/Blockade feststellenden Kommunikationssatelliten getätigt wird, der Routing-Prozessor dazu eingerichtet ist, Routing-Anfragen zu speichern und aus diesen im Falle einer Anfrage zumindest einen alternativen Verbindungsweg zu errechnen, und weiters der Routing-Prozessor dazu eingerichtet ist, den alternativen Verbindungsweg an den die Anfrage tätigenden Kommunikationssatelliten zu übermitteln.

Weitere vorteilhafte Ausführungsformen des erfindungsgemäßen Satelliten-Kommunikationsnetzwerkes sind den abhängigen Ansprüchen 13 - 22 zu entnehmen.

Im folgenden ist die Erfindung an Hand der Zeichnungen näher erläutert. In dieser zeigen
Fig. 1 eine schematische Teilansicht eines Satelliten-Kommunikationsnetzwerkes zur Durchführung des Verfahrens nach der Erfindung, und
Fig. 2 eine schematische Gesamtansicht des Satelliten-Kommunikationsnetzwerkes.

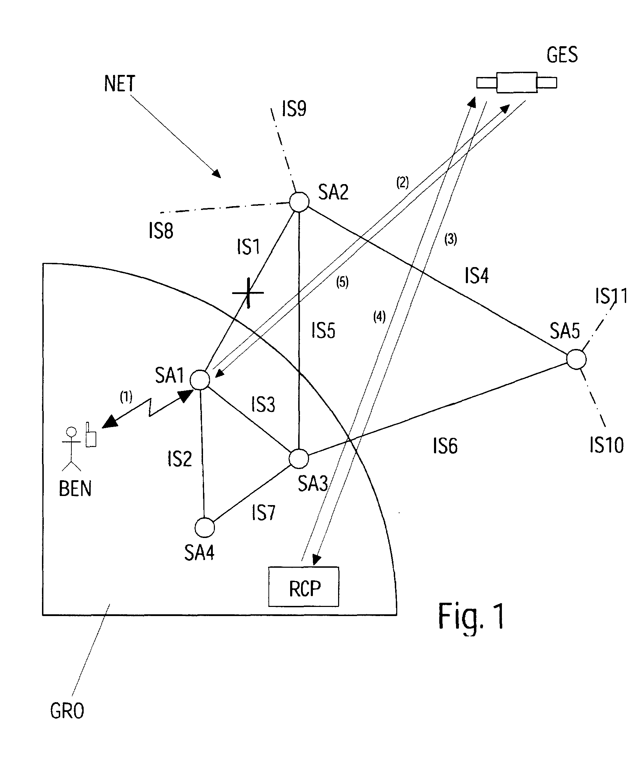

In der Fig. 1 ist ein Teil eines Satelliten-Kommunikationsnetzwerkes NET mit den nicht-stationären Kommunikationssatelliten SA1 - SA5 dargestellt. Diese Kommunikationssatelliten stehen miteinander über Zwischensatellitenverbindungen IS1 - IS7 in Verbindung. Weiters sind noch Zwischensatellitenverbindungen IS8 - IS11 der Kommunikationssatelliten SA2 und SA5 zu anderen, hier nicht gezeigten Satelliten des Kommunikationsnetzwerkes angedeutet.

Bei den Kommunikationssatelliten handelt es sich vorzugsweise um LEO- oder MEO-Satelliten. Diese laufen auf ihren Bahnen mit bestimmten Geschwindigkeiten um, sodass jeder Kommunikationssatellit zu verschiedenen Zeiten unterschiedliche Gebiete auf der Erdoberfläche abdeckt.

Bei einem Verbindungsaufbau von Seiten eines Benutzer BEN, beispielsweise wie hier angedeutet mittels eines dazu eingerichteten Mobilfunkgerätes zu einer in der Figur nicht dargestellten Gegenstelle, wird in einem ersten Schritt (1) eine Verbindung zu einem zu diesem Zeitpunkt dem Funkgerät zugeordneten, d. h. das Aufenthaltsgebiet des Benutzers BEN abdeckenden Kommunikations-Satelliten SA1, dem sogenannten Quellsatelliten, aufgebaut. Falls die notwendigen Ressourcen im Satelliten-Netzwerk NET zur Verfügung stehen, wird über einen primären, voreingestellten Kommunikationspfad die Verbindung zu der gewünschten Gegenstelle bzw. zu dem der Gegenstelle zugeordneten Kommunikationssatelliten, dem Zielsatelliten, über das Netzwerk hergestellt.

Bei der dargestellten Konstellation besteht der primäre Verbindungsweg aus der Zwischensatellitenverbindung IS1 zwischen dem Quellsatelliten SA1 und dem Satelliten SA2 sowie weiteren, aufeinanderfolgenden Zwischensatellitenverbindungen zu dem der Gegenstelle zugeordneten Kommunikationssatelliten, welche in der Zeichnung allerdings nicht dargestellt sind.

Wie nun aus der Fig. 1 zu erkennen ist, läge eine Blockade des primären Kommunikationspfades, beispielsweise durch eine Überlastung oder einen Ausfall der Zwischensatellitenverbindungen IS1 zwischen den Kommunikationssatelliten SA1 und SA2 vor. Der von der Blockade betroffene Kommunikationssatellit SA1 übermittelt nach dem Erkennen der Blockade eine Routing-Anfrage an einen Routing-Prozessor RCP. Dabei wird vorteilhafterweise diese Routing-Anfrage an einen dem anfragenden Kommunikationssatelliten SA1 zu diesem Zeitpunkt zugeordneten geostationären Routing-Satelliten GES übermittelt (2) und von diesem weiter an den Routing-Prozessor RCP gesendet (3). Der Routing-Prozessor RCP befindet sich zweckmäßigerweise auf der Erdoberfläche GRO, was sich unter anderem aus wartungstechnischen Gründen als vorteilhaft erweist. Es ist allerdings keine unabdingbare Voraussetzung für das Funktionieren der erfindungsgemäßen Verfahrens, dass der Routing-Prozessor erdgebunden ist.

Der Routing-Prozessor RCP speichert und wertet die von verschiedenen Routing-Satelliten erhaltenen Anfragen aus und leitet von der zeitlichen und geografischen Verteilung der Anfragen sowie deren Charakteristiken, etwa hinsichtlich Bandbreiten- oder QoS-Anforderungen, ein Abbild der Lastverteilung innerhalb des ihm zugeordneten Bereiches des Satelliten-Kommunikationsnetzwerkes ab. Basierend auf diesen Daten ermittelt der Routing-Prozessor RCP auf eine Anfrage hin zumindest eine alternative Route und übermittelt diese über den geostationären Satelliten GES (4) an den anfragenden Kommunikationssatelliten SA1 (5). Die gewünschte Verbindung wird dann von dem anfragenden Satelliten SA1 über diesen alternativen Kommunikationspfad zu dem Satelliten, welcher der gewünschten Gegenstelle zugeordnet ist, übermittelt.

Um die Anzahl der Routing-Anfragen gering halten zu können, ist vorgesehen, dass Routing-Anfragen nur bei jedem n-ten Blockade- bzw. Überlastungsereignis, beispielsweise mit n=5, an einen Routing-Prozessor übermittelt werden. Für den Fall, dass bei einer Blockade keine Routing-Anfrage getätigt wird, kann der die Blockade feststellende Kommunikationssatellit jenen alternativen Verbindungsweg, der bei der letzten zu einer Routing-Anfrage führenden Blockade errechnet wurde, verwenden.

Falls es die Lastsituation im Netzwerk erfordert, kann natürlich auch n=1 gewählt werden, d. h., dass bei jedem Blockade- bzw. Überlastungsereignis von dem betroffenen Kommunikations-satelliten eine Routing-Anfrage durchgeführt wird. Grundsätzlich sind auch unregelmäßige Abstände zwischen den zu Anfragen führenden Blockade/Überlastungsereignissen denkbar, obwohl konstantes n einfacher zu realisieren und deshalb vorzuziehen ist.

Weiters ist hier noch anzumerken, dass unabhängig davon, bei welchen Blockade/Überlastungsereignissen eine Routing-Anfrage durchgeführt wird, prinzipiell immer folgende Möglichkeiten existieren.

Ein die Überlastung/Blockade feststellender Kommunikationssatellit kann im Falle einer abgesendeten Routing-Anfrage die Antwort des Routing-Prozessors abwarten und den von diesem vorgeschlagenen Verbindungsweg zur Weiterverbindung zum Zielsatelliten verwenden. Es besteht aber auch die Möglichkeit, dass der Kommunikationssatellit zwar die Routing-Anfrage an den Routing-Prozessor abschickt, die Antwort aber nicht abwartet, sondern einen alternativen Verbindungsweg, der ihm im Zuge einer früheren Anfrage übermittelt wurde, zur Weiterverbindung verwendet.

Die gerade getätigte Routing-Anfrage hat dann den Sinn, dass einerseits der Routing-Prozessor ein möglichst aktuelles Bild der Lastverteilung im Satellitenkommunikationsnetzwerk erhält, und dass andererseits der Kommunikationssatellit mit einem aktuellen alternativen Verbindungsweg versorgt wird, den er im Zuge einer späteren Blockade/Überlastung verwenden kann.

Das erfindungsgemäße Verfahren eignet sich insbesondere zum Routen von Verbindungen in einem Satelliten-Kommunikationsnetzwerk, welches Breitbandkommunikation nach dem ATM-Standard überträgt.

Im Gegensatz zu herkömmlichen Telefonverbindungen mit gleicher und konstanter Bandbreite ist für ATM-Netze ("Asynchronous Transfer Mode") eine konstante Bitrate der Ausnahmefall, denn Verbindungen können entsprechend den Verbindungswünschen der Teilnehmer mit unterschiedlicher und zeitlich variabler Bandbreite durchgeführt werden. Neben der gewünschten Bandbreite, z. B. 1 Mbit/s, enthalten Verbindungsanforderungen von Teilnehmern oft auch noch Information hinsichtlich der geforderten Verbindungsqualität.

ATM ist eine Netzwerktechnologie, die zum Transport beliebiger digitaler Information, wie reine Daten, Sprach- und Videodaten etc. geeignet ist, wobei die Bezeichnung ATM gelegentlich als Synonym für B-ISDN (= Broadband Integrated Services Digital Network) verwendet wird. Charakteristisch für ATM ist die Strukturierung in Zellen gleicher Länge. Die zu vermittelnde Information wird auf ATM-Zellen aufgeteilt, nämlich in Pakete zu 53 Byte, die einen Zellenkopf (Header) mit 5 Byte und Nutzinformation (Payload) zu 48 Byte tragen. Dabei identifiziert die Kopfinformation eine bestimmte virtuelle Verbindung. Im Gegensatz zu beispielsweise einem TDMA-Verfahren, bei welchem Zeitschlitze verschiedenen Typen von Datenverkehr im vorhinein zugeordnet sind, wird der bei einer ATM-Schnittstelle ankommende Datenverkehr in die erwähnten 53-Byte-Zellen segmentiert und diese Zellen werden sequentiell, so wie sie erzeugt wurden, weitergesandt. Nähere Einzelheiten zu ATM sind der Literatur entnehmbar. Beispielsweise sei hier genannt: "ATM-Networks, Concepts, Protocols and Applications", von Händel, Huber und Schröder, Verlag Addison-Wesley-Longman, 2. Aufl. 1994 (ISBN 0-201-42274-3).

Im Falle eines ATM-Satellitenkommunikationsnetzwerkes stellt ein Benutzer über eine Teilnehmeranschlussschnittstelle, ein sogenanntes "User Network Interface" (UNI) mittels UNI-Signalisierung eine Verbindung zu einem Kommunikationssatelliten her. Ein beliebiges Paar von Kommunikationssatelliten ist dabei über zumindest einen voreingestellten Verbindungsweg, beispielsweise im Sinne einer sogenannten Verbindung über einen Virtuellen Pfad ("Virtual Path Connection", VPC), über die Struktur der Zwischensatellitenverbindungen verbunden. Es wird nun eine virtuelle ATM-Kanal-Verbindung ("ATM-Virtual Channel Connection", ATM-VCC), auf Verlangen entlang des voreingestellten, primären Verbindungsweges zu einem der Gegenstelle zugeordneten Kommunikationssatelliten hergestellt.

Der Header jeder ATM-Zelle enthält einen sogenannten Virtual Path Identifier (VPI) sowie einen Virtual Channel Identifier (VCI), welche jede Nutzzelle einem bestimmten Virtuellen Pfad und einem darin geführten virtuellen Kanal zuordnen. Die Zellen werden über diese virtuellen Pfade und Kanäle vermittelt, wobei zuvor für die Dauer einer Verbindung eine logische Verbindung aufgebaut wird.

Jeder Kommunikationssatellit verfügt an Bord über eine ATM-Schalteinheit. Diese ATM-Schalteinheiten dienen zur Vermittlung von virtuellen Pfaden und virtuellen Kanälen. Tritt eine Überlastung an dem voreingestellten Verbindungsweg auf, so übermittelt die ATM-Schalteinheit des betroffenen Kommunikationssatelliten eine Routing-Anfrage an einen dem Satelliten zu diesem Zeitpunkt zugeordneten Routing-Prozessor, der einen alternativen Verbindungsweg ermittelt und diesen an den anfragenden Satelliten sendet.

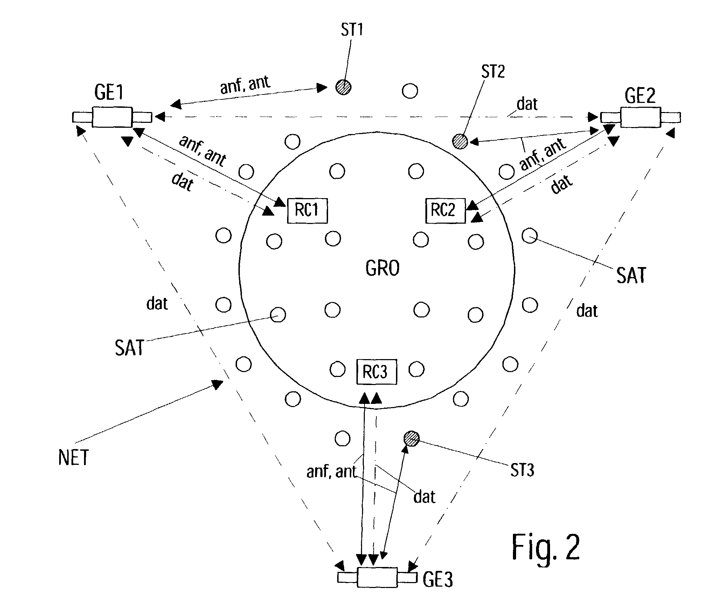

In der Fig. 2 ist ein erfindungsgemäßes Satelliten-Kommunikationsnetzwerk NET in einer Gesamtansicht schematisch dargestellt. Zum Durchführen des angegebenen Verfahrens sind neben den Kommunikationssatelliten SAT, ST1 - ST3 noch drei geostationäre Routing-Satelliten GE1 - GE3 sowie drei Routing-Prozessoren RC1 - RC3 notwendig, von denen jeder einem geostationären Routing-Satelliten zugeordnet ist. Bei günstiger Anordnung der geostationären Satelliten sind zur Abdekkung eines Großteils des Satellitenkommunikationsnetzwerkes NET zwei geostationäre Satelliten ausreichend, im folgenden soll allerdings von drei geostationären Satelliten mit zumindest drei Routing-Prozessoren zur Abdeckung des gesamten Kommunikationsnetzwerkes ausgegangen werden. Zu dem der Darstellung entsprechenden Zeitpunkt ist der Kommunikationssatellit ST1 dem geostationären Satelliten GE1, sowie der Satellit ST2 bzw. ST3 dem geostationären Satelliten GE2 bzw. GE3 zugeordnet, wobei sich diese Zuordnung natürlich im Laufe der Zeit in Folge der Bahnbewegungen der Kommunikationssatelliten ändert.

Die Kommunikationssatelliten können nun über den ihnen jeweils zugeordneten geostationären Satelliten Routing-Anfragen an einen erdgebundenen Routing-Prozessor RC1 - RC3 übermitteln bzw. Routing-Antworten von diesem über den geostationären Satelliten empfangen, wie dies an Hand der Kommunikationssatelliten ST1 - ST3 und der Anfragesignale anf sowie der Antwortsignale ant exemplarisch dargestellt ist.

Jeder geostationäre Satellit GE1 - GE3 steht mit dem ihm zugeordneten Routing-Prozessor RC1 - RC3 in Verbindung und übermittelt Anfragesignale an den jeweiligen Server, die dieser speichert, auswertet und so zu einem Bild der Auslastung der Kommunikationspfade in seinem ihm zugeordneten Gebiet gelangt. Vorteilhafterweise werden die Daten über die Lastverteilungen betreffend die Zwischensatellitenverbindungen als auch die Verbindungen über Virtuelle Pfade über die geostationären Satelliten GE1 - GE3, vorzugsweise in festen Zeitintervallen, mittels Datensignalen dat ausgetauscht. Auf diese Weise kann jeder Routing-Prozessor RC1 - RC3 bei der Ermittlung einer alternaiven Route die gesamte Belastung des Satelliten-Kommunikationsnetzwerkes NET berücksichtigen.

Die Verwendung von primären Kommunikationspfaden beugt der Anrufung beliebiger, nicht-trivialer Routingprozeduren vor, solange keine Überlastungssituationen an den Zwischensatellitenverbindungen bzw. den ATM-Schalteinheiten auftreten. Dadurch können auch äußerst kurze Zeiten für den Verbindungsaufbau erreicht werden. Außerdem brauchen, solange keine Überlastungen existieren, keine Daten über den Netzwerkstatus innerhalb des Kommunikationsnetzwerkes ausgetauscht zu werden.

Überlastungssituationen werden mit geringem routingspezifischem Aufwand umgangen: Routing-Anfragen werden von dem betroffenen nicht-stationären Kommunikations-Satelliten erzeugt und über einen geostationären Routing-Satelliten zu einem ausgewählten Routing-Prozessor übermittelt; es wird keine routing-spezifische Information über Zwischensatellitenverbindungen ausgetauscht. Geostationäre Satelliten sind bereits in die Konstellation von einigen bekannten, auf nicht-stationären Kommunikationssatelliten basierenden Netzwerken, wie etwa dem West-System oder dem Celestri-System, integriert, wobei die genannten Systeme bereits wieder in anderen Kommunikationsnetzwerken integriert sind.

Die Routing-Prozessoren ermitteln an Hand der erhaltenen und gespeicherten Anfragen der verschiedenen Kommunikationssatelliten ein Quasi-Echtzeitbild der Lastverteilungen im satellitenbasierten ATM-Netzwerk. Die Berechnung alternativer Verbindungswege erfolgt dabei beispielsweise mittels verkehrstheoretischer Methoden, wie etwa in der Anmeldung PCT/DE99/02484 detailliert ausgeführt.

Aufgrund von inhomogenen Verteilungen der Benutzerpopulation verfügt ein nicht-stationäres (ATM-)Satellitennetzwerk über eine große Menge im wesentlichen ungenutzter Übertragungskapazität, beispielsweise über den Ozeanen, Wüsten, oder Polarregionen. Diese Kapazitäten können sehr effizient mit dem vorgeschlagenen dynamischen Routingverfahren ausgenutzt werden.

Spezifische Routingmanagementverfahren und Prioritätsverfahren, mittels welcher unterschiedlichen Teilnehmern verschieden hohe Prioritäten zugeordnet werden, können völlig in den Routing-Prozessoren implementiert werden. Alternative Routingverfahren können einfach aufgerüstet werden, weil nur die Routing-Prozessoren davon betroffen sind. Die Verkehrsdaten, welche von den Routing-Prozessoren gesammelt und verarbeitet werden, können auch für Netzwerkplanungs- und Managementzwekke verwendet werden. So können beispielsweise aus den Informationen, welche Teilnehmer in einem bestimmten Zeitraum miteinander wie oft kommunizieren, die Wahrscheinlichkeit der Belegung der Übertragungswege berechnet werden, beispielsweise mit dem sogenannten "Forward-Looking-Routing" Algorithmus, wie er in K.R. Krishnan, T.J. Ott: Forward-Looking Routing: A New State-Dependent Routing Scheme, Teletraffic Science for New Cost-Effective Systems, Networks and Services, ITC-12 (1989) beschrieben ist.

In dem beschriebenen Beispiel beinhalten die Kommunikations-satelliten vollständige ATM-Vermittlungseinheiten mit Eingabe/Ausgabemodulen, eine Zellschalter-Struktur, ein CAC-Modul ("Connection Admission Control"), welches Rufhandling- und Signalisierungsmöglichkeiten beinhaltet, und zusätzlich noch ein Systemmanagementmodul. Es sind aber auch andere Lösungen möglich, beispielsweise eine Konfiguration, bei welcher die Kommunikationssatelliten nur Eingabe/Ausgabemodule und einen Zellenstruktur-Schalter aufweisen, und das CAC-Modul am Boden platziert ist. In diesem Fall sind verschiedene Signalisierungsarchitekturen denkbar, darunter Benutzer-Signalisierungen, welche entweder über geostationäre Satelliten oder über dezidierte Signalisierungskanäle über nichtstationäre Satelliten an ein Netzwerkkontroll-Center übermittelt werden. Die Grundprinzipien des vorgeschlagenen Routingverfahrens werden von diesen unterschiedlichen Möglichkeiten allerdings nicht berührt.

Es existieren auch verschiedene Möglichkeiten in Bezug auf das logische Vernetzen im Sinne vorkonfigurierter semipermanenter virtueller Pfadverbindungen innerhalb des Satellitennetzwerkes. Ein hoher Vernetzungsgrad bis hin zu voller Vernetzung ist in Netzwerken von Vorteil, welche sehr hohes Volumen oder sehr hohen Verkehr unterstützen müssen, beispielsweise ATM-Core Netzwerke, so dass jedes beliebige Paar von ursprünglich bestimmten ATM-Schalteinheiten ständig eine ziemlich große und vorhersagbare Anzahl von Verbindungen erwarten kann. Das ist bei dem erfindungsgemäßen ATM-Satellitennetzwerken nicht der Fall. In diesen Netzwerken ist es vorteilhaft, nur ein schwach vernetztes logisches Netzwerk von Virtuellen Pfadverbindungen zu erstellen, was bedeutet, dass die meisten Kommunikationspfade über mehrere hintereinandergeschaltete virtuelle Pfade bestehen. Es ist wichtig, im Zusammenhang mit nicht-stationären Kommunikationssatelliten zu betonen, dass eine bestimmte Konfiguration von virtuellen Pfadverbindungen natürlich in Bezug auf die Erde/Grund, basierend auf der räumlichen Verteilung der Benutzer definiert sein muss, und dass die Virtuellen Pfadverbindungen darum häufig entsprechend der Bewegung der Satellitenkonstellation übergeben werden müssen.

Die Prinzipien des vorgeschlagenen Routingverfahrens sind unabhängig vom Grad der logischen Vernetzung. Jedoch müssen hier, im Gegensatz zu voll vernetzten Netzwerken, die Routing-Prozessoren auch die Routen-Such-Algorithmen, wie beispielsweise den Dijkstra-Algorithmus (ATM-Forum, PNNI Version 1.0, af-pnni-0055, März 1996), ausführen.

Bis jetzt wurde das vorgeschlagene Routingverfahren nur für die Phase des Verbindungsaufbaus angewendet. Es ist ein unverwechselbares Merkmal von Satellitennetzwerken mit nicht-stationären Kommunikationssatelliten, dass häufige Übergabeereignisse auch für feste Benutzer aufgrund der Bewegung der Satelliten auftreten. Das vorgeschlagene Verfahren kann auch auf Situationen angewendet werden, bei denen eine Übergabe einer Verbindung zu einem anderen Satelliten aufgrund eines Mangels an Übertragungsressourcen nicht durchgeführt werden kann. Tatsächlich kann in diesem Fall der Kommunikationssatellit, welcher die mögliche Überlastungssituation feststellt, eine Routing-Anfrage an einen Routing-Prozessor richten, der mit der optimalen Alternativroute wie im Falle eines Verbindungsaufbaus antworten wird. Die "Handover"-Routinganfrage sollte früh genug gesendet werden, damit eine gewisse Verzögerung durch Berechnungen und Übermittlung möglich ist. Es sollte allerdings festgehalten werden, dass die Implementierung eines geeigneten Algorithmus zur Handover-Steuerung in der Lage sein sollte, das Auftreten solcher Handover-Stauungen zu verhindern oder signifikant zu unterdrücken.

## Patentansprüche

1. Verfahren zum Routen von Verbindungen in einem vermittelnden Satelliten-Kommunikationsnetzwerk (NET) mit Kommunikationssatelliten (SA1 - SA5, ST1 - ST3, SAT), wobei jeder Kommunikationssatellit (SA1 - SA5, ST1 - ST3, SAT) mit zumindest einem anderen Kommunikationssatelliten des Netzwerkes (NET) über eine Zwischensatellitenverbindung (IS1 - IS11) verbunden ist, und ein beliebiges Paar von Kommunikationssatelliten über zumindest einen voreingestellten, aus einer bestimmten Reihenfolge von Zwischensatellitenverbindungen bestehenden Verbindungsweg miteinander verbindbar ist,
**dadurch gekennzeichnet**, dass
bei Blockade- bzw. Überlastungsereignissen betreffend den primären Verbindungsweg von dem das Blockade- bzw. Überlastungsereignis feststellenden Kommunikationssatelliten (SA1, ST1 - ST3) eine Routing-Anfrage an zumindest einen dem Satelliten-Kommunikationsnetzwerk (NET) zugeordneten Routing-Prozessor (RCP, RC1 - RC3) übermittelt wird, welcher unter Benutzung der an ihn übermittelten Routing-Anfragen zumindest einen alternativen Verbindungsweg errechnet und diesen an den die Routing-Anfrage tätigenden Kommunikationssatelliten (SA1, ST1 - ST3) des primären Verbindungsweges übermittelt.

2. Verfahren nach Anspruch 1,
**dadurch gekennzeichnet**, dass Routing-Anfragen nur bei jedem n-ten Blockade- bzw. Überlastungsereignis an den Routing-Prozessor (RCP, RC1 - RC3) übermittelt werden.

3. Verfahren nach Anspruch 1 oder 2,
**dadurch gekennzeichnet**, dass die Routing-Anfrage des das Blockade/Überlastungsereignis feststellenden Kommunikationssatelliten (SA1, ST1 - ST3) über einen ihm zumindest temporär zugeordneten Routing-Satelliten (GES, GE1 - GE3) zu dem Routing-Prozessor (RCP, RC1 - RC3) übermittelt wird.

4. Verfahren nach Anspruch 3,
**dadurch gekennzeichnet,** dass die Übermittlung des zumindest einen alternativen Verbindungsweges an den das Blockade/Überlastungsereignis feststellenden Kommunikations-satelliten (SA1, ST1 - ST3) über einen ihm zumindest temporär zugeordneten Routing-Satelliten (GES, GE1 - GE3) erfolgt.

5. Verfahren nach Anspruch 3 oder 4,
**dadurch gekennzeichnet**, dass als Routing-Satellit (GES, GE1 - GE3) ein geostationärer Satellit verwendet wird.

6. Verfahren nach einem der Ansprüche 3 bis 5,
**dadurch gekennzeichnet**, dass für das Satelliten-Kommunikationsnetzwerk (NET) zumindest zwei Routing-Satelliten (GET, GE1 - GE3) verwendet werden.

7. Verfahren nach einem der Ansprüche 1 bis 6,
**dadurch gekennzeichnet**, dass zumindest zwei Routing-Prozessoren (RCP, RC1 - RC3) verwendet werden.

8. Verfahren nach einem der Ansprüche 1 bis 7,
**dadurch gekennzeichnet**, dass erdgestützte Routing-Prozessoren (RCP, RC1 - RC3) verwendet werden.

9. Verfahren nach einem der Ansprüche 1 bis 8,
**dadurch gekennzeichnet**, dass Lastdaten betreffend Lastverteilungen im Satellitenkommunikationsnetzwerk (NET) zwischen den Routing-Prozessoren (RCP, RC1 - RC3) - vorzugsweise in festen Zeitintervallen - ausgetauscht werden.

10. Verfahren nach Anspruch 9,
**dadurch gekennzeichnet**, dass die Lastdaten mittels der Routing-Satelliten (GE1 - GE3, GES) zwischen den Routing-Prozessoren (RC1 - RC3, RCP) ausgetauscht werden.

11. Verfahren nach einem der Ansprüche 1 bis 10, gekennzeichnet durch eine Verwendung zum Routen von Verbindungen in einem ATM-Satelliten-Kommunikationsnetzwerk.

12. Vermittelndes Satelliten-Kommunikationsnetzwerk (NET) zum Routen von Verbindungen mit Kommunikationssatelliten (SA1 - SA5, ST1 - ST3, SAT), wobei jeder Kommunikationssatellit mit zumindest einem anderen Kommunikationssatelliten des Netzwerkes über eine Zwischensatellitenverbindung (IS1 - I11) in Verbindung steht, und ein beliebiges Paar von Kommunikationssatelliten über zumindest einen voreingestellten, aus einer bestimmten Reihenfolge von Zwischensatellitenverbindungen bestehenden Verbindungsweg miteinander verbindbar ist,
dadurch gekennzeichnet, dass
die Kommunikationssatelliten (SA1 - SA5, ST1 - ST3, SAT) dazu eingerichtet sind, im Falle von Überlastungs/Blockadeereignissen Routing-Anfragen an zumindest einen dem Satelliten-Kommunikationsnetzwerk (NET) zugeordneten Routing-Prozessor (RCP, RC1 - RC3) zu übermitteln, wobei die Anfrage von dem das Überlastungs/Blockadeereignis feststellenden Kommunikationssatelliten (SAT, ST1 - ST3) getätigt wird, der Routing-Prozessor (RCP, RC1 - RC3) dazu eingerichtet ist, Routing-Anfragen zu speichern und unter Benutzung dieser zumindest einen alternativen Verbindungsweg zu errechnen, und weiters der Routing-Prozessor (RCP, RC1 - RC3) dazu eingerichtet ist, den alternativen Verbindungsweg an den die Anfrage tätigenden Kommunikationssatelliten (SAT, ST1 - ST3) zu übermitteln.

13. Satelliten-Kommunikationsnetzwerk nach Anspruch 12,
dadurch gekennzeichnet, dass die Kommunikationssatelliten (SAT, SA1 - SA5, ST1 - ST3) dazu eingerichtet sind, Routing-Anfragen nur bei jedem n-ten Blockade- bzw. Überlastungsereignis an den Routing-Prozessor (RCP, RC1 - RC3) zu übermitteln.

14. Satelliten-Kommunikationsnetzwerk nach Anspruch 12 oder 13,
**dadurch gekennzeichnet**, dass den Kommunikationssatelliten (SAT, SA1 - SA5, ST1 - ST3) Routing-Satelliten (GES, GE1 - GE3) zugeordnet sind, und eine Routing-Anfrage eines das Blockade/Überlastungsereignis feststellenden Kommunikationssatelliten (SAT, ST1 - ST3) an den Routing-Prozessor (RCP, RC1 - RC3) über den ihm momentan zugeordneten Routing-Satelliten (GES, GE1 - GE3) übermittelt wird.

15. Satelliten-Kommunikationsnetzwerk nach Anspruch 14,
**dadurch gekennzeichnet**, dass die Übermittlung des zumindest einen alternativen Verbindungsweges an den das Blockade/Überlastungsereignis feststellenden Kommunikations-satelliten (SAT, ST1 - ST3) über den ihm momentan zugeordneten Routing-Satelliten (GE1 - GE3, GES) erfolgt.

16. Satelliten-Kommunikationsnetzwerk nach Anspruch 14 oder 15,
**dadurch gekennzeichnet**, dass der Routing-Satellit (GES, GE1 - GE3) ein geostationärer Satellit ist.

17. Satelliten-Kommunikationsnetzwerk nach einem der Ansprüche 14 bis 16,
**dadurch gekennzeichnet**, dass das Satelliten-Kommunikationsnetzwerk (NET) zumindest zwei Routing-Satelliten (GES, GE1 - GE3) aufweist.

18. Satelliten-Kommunikationsnetzwerk nach einem der Ansprüche 12 bis 17,
**dadurch gekennzeichnet**, dass ihm zumindest zwei Routing-Prozessoren (RCP, RC1 - RC3) zugeordnet sind.

19. Satelliten-Kommunikationsnetzwerk nach einem der Ansprüche 12 bis 18,
**dadurch gekennzeichnet**, dass ihm erdgestützte Routing-Prozessoren (RCP, RC1 - RC3) zugeordnet sind.

20. Satelliten-Kommunikationsnetzwerk nach einem der Ansprüche 12 bis 19,
**dadurch gekennzeichnet**, dass die Routing-Prozessoren (RC1 - RC3, RCP) dazu eingerichtet sind, Daten betreffend Lastverteilungen - vorzugsweise in festen Zeitintervallen - untereinander auszutauschen.

21. Satelliten-Kommunikationsnetzwerk nach Anspruch 20,
**dadurch gekennzeichnet**, dass die Routing-Prozessoren (RC1 - RC3, RCP) die Lastdaten über die Routing-Satelliten (GE1 - GE3, GES) untereinander austauschen.

22. Satelliten-Kommunikationsnetzwerk nach einem der Ansprüche 12 - 21,
**dadurch gekennzeichnet**, dass zum Routen von Verbindungen ein ATM-Verfahren verwendet ist.
